# FASCICULE DE BREVET EUROPEEN

(11) **EP 0 664 184 B1**
(45) Date de publication et mention de la délivrance du brevet: **15.09.1999**
(21) Numéro de dépôt: 95400004.8
(22) Date de dépôt: 03.01.1995
(51) Int. Cl.: B23P 15/00, F16C 11/06

(54) **Rotule à haute résistance mécanique et procédé de fabrication**
Kugelgelenklager mit hoher mechanischer Festigkeit und sein Herstellungsverfahren
Ball-joint bearing with high mechanical strength and method for manufacturing it

(30) Priorité: 25.01.1994 FR 9400772
(43) Date de publication de la demande: 26.07.1995
(73) Titulaire: Société à Responsabilité Limitée, SOCIETE INTERNATIONALE DES APPLICATIONS ET TECHNIQUES MANGACHOC, 59380 Spycker (FR)
(72) Inventeur: Peters, Henri, F-59380 Spycker (FR)
(74) Mandataire: Jolly, Jean-Pierre

(56) Documents cités:
- DE-A- 2 712 539
- DE-B- 1 252 043
- FR-A- 2 614 374
- GB-A- 804 392
- US-A- 3 179 477
- US-A- 3 526 940

## Description

La présente invention concerne un procédé de fabrication d'une rotule à haute résistance mécanique et notamment à l'abrasion, au choc et à l'écrasement, du type à assemblage de la rotule par extension de sa cage.

On connaît par US-A-3 179 477 une rotule à haute résistance mécanique, du type à assemblage par extension de la cage fendue sur une amorce de rupture. Néanmoins, l'obtention d'une telle fente est délicate et diminue la rigidité de la cage même maintenue, et par conséquent, sa capacité d'absorption des chocs.

On connaît par ailleurs des cages de rotules, réalisées en une matière traitée à coeur à haute dureté (plus de 60 H.R.C.), dont la partie sphérique d'articulation de même matière et traitement est reçue dans la cage par ouverture de celle-ci sur un rayon au moyen d'un choc sur la face latérale. Cependant, ces rotules sont fragiles, étant sujettes à des fractures de la cage. En outre, toute interruption du graissage, surtout pour une exposition au choc et à l'écrasement rend ces rotules très vulnérables.

L'invention vise a remédier à ces inconvénients.

Il est en effet proposé selon l'invention un procédé de fabrication d'une rotule à haute résistance mécanique et notamment à l'abrasion, au choc et à l'écrasement, conforme à la revendication 1.

Naturellement, on pourra réaliser un traitement de finition de la surface extérieure de la cage, au niveau de la soudure notamment, par exemple un meulage de cette zone, ou encore effectuer un usinage de cette surface extérieure à la dimension externe de cage requise.

Des matériaux constitutifs de l'élément sphérique sont avantageusement des nuances connues sous l'appellation Z 30C 13T ou 42 CD 4T.

Néanmoins, pour des rotules de grand diamètre (300 mm et plus), les matériaux spécifiés précédemment pour la bague et l'élément sphérique, respectivement, peuvent être inversés.

On obtient ainsi une rotule à haute résistance mécanique et à l'abrasion, l'élément à base de manganèse absorbant l'énergie de choc et d'écrasement éventuelle et s'autoécrouissant en surface contre celle de l'autre élément pour permettre l'autolubrification de l'articulation. Cet autoécrouissage s'accroît au fur et à mesure de la sollicitation jusqu'à parvenir à la dureté de la surface antagoniste de l'élément sphérique.

L'invention est illustrée ci-après à l'aide d'un exemple de réalisation et en référence aux dessins annexés, sur lesquels :
- La figure 1 est une vue de la bague de rotule tronçonnée et chanfreinée pour soudure selon le procédé de l'invention,
- La figure 2 est une vue schématique en élévation montrant l'assemblage de l'élément sphérique dans la bague ou cage de rotule, et
- La figure 3 est une vue du gabarit de mise en forme de la bague pour la soudure de ses extrémités tronçonnées.

Avec référence au dessin, la rotule d'articulation selon l'invention est du type comprenant un élément sphérique 1 ou rotule proprement dite insérée en mouvement rotatif libre dans une bague circulaire ou cage complémentaire 3. La rotule est destinée à être montée de façon classique sur un arbre par sa partie d'alésage.

L'élément sphérique 1 est issu d'usinage de façon typique, en acier Z 30C 13T prétraité à 882-1029N/mm² (90-105 kg/mm²) à coeur et sa surface est traitée thermiquement par induction à très haute dureté, environ 1862N/mm² (190 kg/mm²) ou environ 55 H.R.C.) sur une épaisseur de 2 à 3 mm. Cet élément ne subit aucun autre traitement.

La bague 3 est issue de forgeage et d'usinage en un acier au manganèse austénitique de nuance Z 120M 12 précitée. La surface intérieure, recevant l'élément sphérique, est légèrement préécrouie à une dureté de 38 à 40 H.R.C. sur une profondeur de 3-5 dixièmes de mm. Les dimensions de cette bague sont légèrement supérieures à celles de la bague définitive. En effet, sa circonférence intérieure possède une longueur supplémentaire e, de 1,4 mm, égale à la largeur de la lame de l'outil utilisé pour l'opération de tronçonnage ultérieure. Cette longueur e peut varier au maximum de 1 mm selon les dimensions de la rotule, de 100 à 300 mm de diamètre, en proportion directe du diamètre. De même, son épaisseur est légèrement plus importante, 1 à 2 mm, pour permettre l'étape de finition extérieure ultérieure (usinage) à la cote définitive.

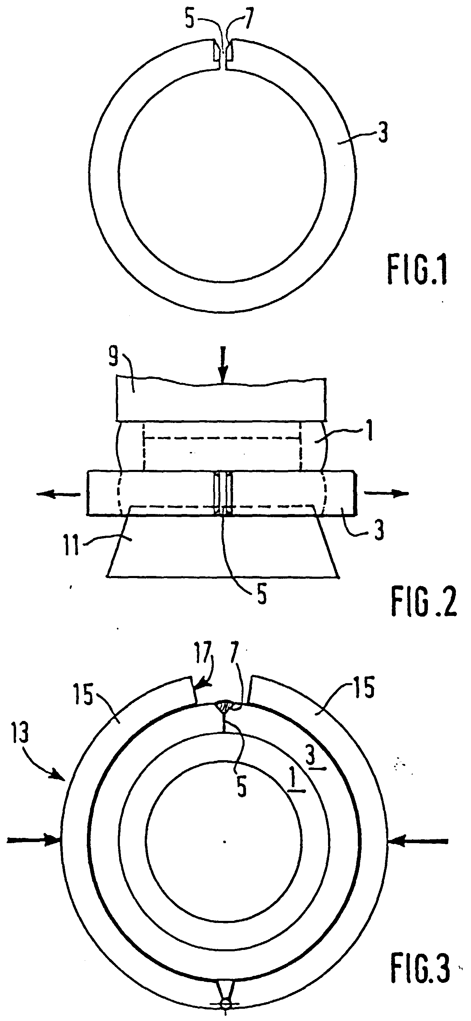

La première opération typique du procédé de fabrication selon l'invention est un tronçonnage de la bague suivant un rayon, par un outil de coupe classique, par exemple à disque rotatif de tronçonnage de largeur égale à 1,4 mm. La bague est ainsi tronçonnée en 5 et un chanfrein 7 est ensuite réalisé à la partie supérieure de la fente 5 du tronçonnage comme représenté à la figure 1. Ce chanfrein est formé sur toute la largeur de la bague, de même que sur ses côtés jusqu'à une distance d'environ 1 mm (au plus près) de la zone de surface inférieurs traitée et sur une profondeur égale sensiblement à la moitié de l'épaisseur de celle-ci.

La seconde opération du procédé concerne l'assemblage de la rotule représenté à la figure 2.

Pour cette opération, on utilise une presse dont le poinçon applicateur 9 a une forme adaptée (complémentaire) des faces latérales de la bague, et un socle ou matrice inférieure tronconique 11, effilé vers le haut, dont la section correspond à l'ouverture latérale de la bague pour qu'elle y soit engagée à sa partie supérieure, et d'angle de cône relativement faible.

La bague est donc engagée par l'une de ses ouvertures latérales sur la matrice 11 et l'élément sphérique, posé sur l'autre ouverture de la bague, reçoit sur sa face supérieure le poinçon applicateur 9 de la presse. Le poinçon est appliqué à force vers le socle, l'élément sphérique demeurant dans une disposition parallèle à la bague. Celle-ci s'étend sous l'action du cone et dès qu'elle s'est suffisamment écartée, l'élément sphérique pénètre de lui-même, sous l'élasticité de la bague, dans celle-ci.

La rotule est à présent assemblée et peut subir la troisième opération de liaison des bords tronçonnés de la bague. Celle-ci consiste en une soudure effectuée au niveau du chanfrein 7 de la fente de la bague.

La rotule est introduite dans un gabarit 13 de mise en forme de la bague à sa dimension définitive de service. Ce gabarit comporte deux mâchoires 15 sensiblement demi-circulaires, complémentaires de la bague dans sa forme resserrée et articulées au niveau inférieur. Ces mâchoires appliquées l'une vers l'autre à force jusqu'au resserrement complet de la bague avec application l'un sur l'autre des bords de tronçonnage, ménagent une ouverture supérieure 17 permettant d'effectuer ladite opération de soudure. Celle-ci est effectuée de façon classique sous arc électrique (sous gaz neutre entre électrodes) avec apport de matière par un fil de matière de soudure approprié, par exemple à base de nickel-chrome, à une température inférieure à 250°C pour ne pas affecter les zones de surface traitées. Pour la même raison, on ne s'approche pas de ces zones traitées à moins de 1 mm (sur les chanfreins latéraux) et l'élément sphérique est orienté à 90° de la bague et à distance de la soudure. Lorsque la bague est en acier au manganèse austénitique, la couche de couverture de soudure est effectuée en la même matière que la bague.

Lorsque l'opération de soudure est achevée, une opération d'usinage de la bague à sa côte externe définitive est effectuée. Cette opération de finition permet de dissimuler la soudure effectuée.

La rotule est alors achevée.

On notera que l'invention n'est pas limitée à l'exemple décrit et que de nombreuses variantes de réalisation peuvent y être incluses. Ainsi l'assemblage au lieu d'être effectué à plat comme décrit ci-dessus, peut l'être avec l'élément sphérique appliqué perpendiculairement à la bague, tenu par une partie de sa circonférence sur un poinçon applicateur de forme adéquate, tandis que la bague s'ouvre sur un socle inférieur largement ouvert dans sa partie interne (de type manchon recevant les faces latérales de la bague.

De même, le gabarit de mise en forme peut être de forme à alésage interne conique recevant la rotule à force, en butée à sa position resserrée définitive.

## Revendications

1. Procédé de fabrication d'une rotule à haute résistance mécanique et notamment à l'abrasion, au choc et à l'écrasement, du type à assemblage de la rotule par extension de sa cage, caractérisé en ce qu'il comprend les phases suivantes :
- l'usinage d'un élément sphérique (1) constitué en acier à haute dureté, prétraité à 882-1029N/mm² à coeur et à une dureté d'au moins 55H.R.C. en surface, sur une épaisseur de 1,5 à 3 mm ;
- le forgeage et l'usinage d'une cage (3) ou bague réceptrice de l'élément sphérique (1) en un acier austénitique au manganèse de nuance Z 120M 12, à savoir 12% de manganèse et 1,2% de carbone, à un diamètre de surface interne légèrement supérieur à celui de l'élément sphérique (1) de facon à ce que sa circonférence intérieure soit supérieure d'une valeur e de 1-2,5 mm à celle de cet élément, la surface interne ce la cage étant en outre légèrement préécrouie à une dureté de 38 à 40 H.R.C. et sur une faible profondeur, de quelques dixièmes de mm, tandis que la matière à coeur conserve sa ductilité ;
- le tronçonnage de la cage (3), sensiblement sur un rayon par un outil de coupe dont l'épaisseur de lame ou tronconnée est égale à ladite valeur e ;
- l'extension de la cage (3) pour permettre l'introduction de l'élément sphérique (1) ou assemblage de la rotule, par ouverture de la cage sur un outil à base conique inférieur(11) et introduction supérieure de l'élément sphérique au moyen d'une presse ;
- le serrage de la rotule ainsi assemblée dans un gabarit de mise en forme (13) de la rotule, à ses dimensions définitives ; et
- la soudure de la partie tronconnée (5), avec contrôle de température à un faible niveau de façon à ne pas nuire aux surfaces traitées, de très haute dureté.

2. Procédé de fabrication selon la revendication 1, caractérisé en ce qu'il est complété d'un traitement de finition de la surface extérieure de la cage, au niveau de la soudure notamment, par meulage de cette zone, ou usinage, à la dimension externe de cage requise.

3. Procédé de fabrication selon la revendication 1 ou 2, caractérisé en ce que des matériaux constitutifs de l'élément sphérique (1) sont des nuances connues sous l'appellation Z 30C 13T ou 42CD 4T, la surface intérieure ou d'articulation étant traitée à une dureté de 1862N/mm² sur une épaisseur de 2 à 3 mm par un procédé classique d'induction.

4. Procédé de fabrication selon l'une des revendications précédentes, caractérisé en ce que pour des rotules de grand diamètre, 300 mm et plus, les matériaux précités de l'élément sphérique et de la bague, respectivement, sont inversés.

5. Procédé de fabrication selon l'une des revendications précédentes, caractérisé en ce qu'un chanfrein (7) est réalisé sur la partie tronconnée (5) de la bague, ceci aux fins de ladite opération de soudure, ce chanfrein étant par exemple formé sur toute la largeur de la bague, de même que sur ses côtés jusqu'à une distance d'environ 1 mm, au plus près, de la zone de surface inférieure traitée, et sur une profondeur égale sensiblement à la moitié de l'épaisseur de celle-ci.

6. Procédé de fabrication selon l'une des revendications précédentes, caractérisé en ce que pour ladite opération d'assemblage, on utilise une presse dont le poinçon applicateur (9) a une forme adaptée complémentaire des face latérales de la bague (3), et un socle ou matrice inférieure tronconique (11), effilé vers le haut, dont la section correspond à l'ouverture latérale de la bague pour qu'elle y soit engagée à sa partie supérieure, et d'angle de cône relativement faible.

7. Procédé de fabrication selon l'une des revendications précédentes, caractérisé en ce que pour ladite opération de serrage de la cage de rotule assemblée en vue de la soudure de la partie tronçonnée (5), on utilise un gabarit (13) qui comporte deux mâchoires (15) sensiblement demi-circulaires, complémentaires de la bague dans sa forme resserrée et articulées au niveau inférieur, ces mâchoires étant appliquées l'une vers l'autre à force jusqu'au resserrement complet de la bague avec application l'un sur l'autre des bords de tronconnage, ménageant une ouverture supérieure (17) permettant d'effectuer ladite opération de soudure.

8. Procédé de fabrication selon l'une des revendications précédentes, caractérisé en ce que ladite opération de soudure est effectuée de facon classique sous arc électrique, sous gaz neutre entre des électrodes, avec apport de matière par un fil de matière de soudure approprié, par exemple à base de nickel-chrome, à une température inférieure à 250°C pour ne pas affecter les zones de surface traitées.

9. Procédé de fabrication selon l'une des revendications 1-5 et 7,8, caractérisé en ce que l'assemblage de la rotule est effectué avec l'élément sphérique (1) appliqué perpendiculairement à la bague (3), tenu par une partie de sa circonférence sur un poincon applicateur de forme adéquate, tandis que la bague s'ouvre sur un socle inférieur largement ouvert dans sa partie interne et de type manchon recevant les faces latérales de la bague.

10. Procédé de fabrication selon l'une des revendications 1-6 et 8,9, caractérisé en ce que le gabarit de mise en forme est de forme à alésage interne conique recevant la rotule à force, en butée à sa position resserrée définitive.

## Claims

1. A process for manufacturing a ball joint of high mechanical strength and in particular high abrasion, impact and crushing resistance, of the type comprising assembly of the ball joint by expansion of its cage, characterised in that it comprises the following stages:
- machining a spherical element (1) consisting of high hardness steel, pretreated at 882-1029N/mm² at the core and provided with a surface hardness of at least 55H.R.C. over a thickness of 1.5 to 3 mm;
- forging and machining of a cage (3) or receiving ring for the spherical element, of an austenitic manganese steel of the quality Z 120M 12, i.e. 12 % manganese and 1.2 % carbon, to provide an internal surface diameter slightly larger than that of the spherical element (1) in such a way that its internal circumference is greater by a value e of l-2.5 mm than that of said element, the inner surface of the cage additionally being slightly pre-workhardened to a hardness of 38 to 40 H.R.C. to a small depth, of a few tenths of a millimetre, while the core material maintains its ductility;
- slitting of the cage (3), substantially along a radius, by a cutting tool, the thickness of whose blade or cut is equal to said value e;
- expansion of the cage (3) to permit introduction of the spherical element (1) or assembly of the ball joint, by opening the cage on a tool with a lower conical base (11) and introducing the spherical element from above by means of a press;
- clamping of the ball joint thus assembled in a shaping jig (13) for producing the ball joint with its final dimensions; and
- welding of the slit part (5), the temperature being kept low so as not to damage the treated, very high hardness surfaces.

2. A manufacturing process according to claim 1, characterized in that it is completed by finishing of the outer surface of the cage, in particular at the weld point, by grinding of this zone, or machining, to the required outer cage dimension.

3. A manufacturing process according to claim 1 or claim 2, characterised in that the spherical element (1) consists of materials of qualities known as Z 30C 13T or 42CD 4T, the inner or joint surface being treated to a hardness of 1862N/mm² over a thickness of 2 to 3 mm by a conventional induction process.

4. A manufacturing process according to any one of the preceding claims, characterised in that, for ball joints exhibiting large diameters, of 300 mm or more, the above-mentioned materials used for the spherical element and the ring respectively are reversed.

5. A manufacturing process according to any one of the preceding claims, characterised in that the slit portion (5) of the ring is bevelled (7), for the purpose of said welding operation, this bevelled portion being formed, for example, over the entire width of the ring, as well as over its sides as far as a distance of approximately 1 mm, at the closest, from the treated lower surface zone, and over a depth equal to substantially half the thickness thereof.

6. A manufacturing process according to any one of the preceding claims, characterised in that said assembly operation is effected using a press, whose applicator punch (9) is of a shape which has been adapted to be complementary to the lateral faces of the ring (3), and a truncated cone-shaped lower base or die (11) tapered towards the top, whose cross section corresponds to the lateral opening of the ring so that it may be engaged therein at its upper part and which exhibits a relatively slight angle of taper.

7. A manufacturing process according to any one of the preceding claims, characterised in that said operation involving clamping the assembled ball joint cage with a view to welding the slit part (5) is effected using a jig (13) comprising two substantially semi-circular jaws (15), of a shape complementary to that of the ring in its tightened form and articulated at the bottom, these jaws being forced towards each other until the ring is completely tightened, with the slit edges applied against each other, and forming an upper opening (17) allowing said welding operation to be carried out.

8. A manufacturing process according to any one of the preceding claims, characterised in that said welding operation is carried out in conventional manner by electric arc, an inert gas being present between the electrodes, material being provided in the form of a wire of suitable welding material, for example a nickel-chromium-based material, at a temperature lower than 250°C so as not to affect the treated surface zones.

9. A manufacturing process according to any one of claims 1-5 and 7,8, characterised in that assembly of the ball joint is effected by applying the spherical element (1) perpendicularly to the ring (3), it being held by part of its circumference on an applicator punch of suitable form, while the ring is opened on a lower base which is largely open on the inside and is of the sleeve type to accommodate the lateral faces of the ring.

10. A manufacturing process according to any one of claims 1-6 and 8,9, characterised in that the shaping jig comprises an inner tapered bore receiving the ball joint under force until it reaches its final tightened position.

## Patentansprüche

1. Verfahren zur Herstellung eines Kugelgenlenks von hoher mechanischer Festigkeit und insbesondere hoher Abrieb-Stoß- und Druckfestigkeit in der Art, daß die Montage des Kugelgelenks durch Erweiterung seines Käfigs erfolgt, dadurch gekennzeichnet, daß es die folgenden Phasen umfaßt:
- Bearbeitung eines kugelförmigen Elements (1) aus Stahl von hoher Härte, der im Kern auf 662 bis 1029 N/mm² und an der Oberfläche auf eine mittels Spitze zu bestimmende Rockwellhärte von mindestens 55 HRC auf eine Tiefe von 1.5 bis 3 mm vorbehandelt ist;
- Schmieden und Bearbeitung eines Käfigs (3) oder eines Rings zur Aufnahme des kugelförmigen Elements (1) aus einem austenitischen Manganstahl der Güte Z 12CM 12 mit 12 % Mangan und 1.2 % Kohlenstoff auf einen inneren Oberflächendurchmesser, der etwas größer als der des kugelförmigen Elements (1) ist, dergestalt, daß sein innerer Umfang um einen Wert e von 1 bis 2.5 mm größer als der des Elements ist, wobei die Innenfläche des Käfigs darüber hinaus auf eine mittels Spitze zu bestimmende Rockwellhärte von 38 bis 40 HRC und auf eine geringe Tiefe von einigen Zehntel Millimetern leicht vorgehärtet ist, während das Kernmaterial seine Verformbarkeit behält;
- Abstechen des Käfigs (3) weitgehend auf einem Radius mittels eines Schneidwerkzeugs, dessen Schneiden- oder Abstechdicke gleich dem Wert e ist;
- Erweiterung des Käfigs (3), um die Einführung des kugelförmigen Elements (1) oder die Montage des Kugelgelenks durch Öffnen des Käfigs auf einem Werkzeug mit konischer Unterseite (11) und die Einführung des kugelförmigen Elements mittels einer Presse von oben zu ermöglichen;
- Einspannen des auf diese Weise montierten Kugelgelenks in eine Vorrichtung (13), um die Form des Kugelgelenks mit dessen endgültigen Abmessungen herzustellen; und
- Schweißen des abgestochenen Abschnitts (5) unter Regelung der Temperatur auf einem geringen Wert dergestalt, daß die behandelten Oberflächen nicht durch eine sehr hohe Härte beeinträchtigt werden.

2. Herstellungsverfahren nach Anspruch 1, dadurch gekennzeichnet,
daß es durch eine Fertigbearbeitung der Außenfläche des Käfigs insbesondere im Bereich der Schweißung durch Schleifen oder eine sonstige Bearbeitung dieser Zone auf das erforderliche Außenmaß des Käfigs komplettiert wird.

3. Herstellungsverfahren nach Anspruch 1 oder 2, dadurch gekennzeichnet,
daß es sich bei den für das kugelförmige Element (1) verwendeten Materialien um unter der Bezeichnung Z 30C 13T oder 42CD 4T bekannte Güten handelt, wobei die Innen- oder Gelenkoberfläche durch eine klassische Induktionsmethode auf eine Härte von 1862 N/mm² auf eine Tiefe von 2 bis 3 mm behandelt ist.

4. Herstellungsverfahren nach irgendeinem der vorstehenden Ansprüche, dadurch gekennzeichnet,
daß für Kugelgelenke von großem Durchmesser von 300 mm und mehr die vorgenannten Materialien des kugelförmigen Elements bzw. des Rings umgekehrt zur Verwendung kommen.

5. Herstellungsverfahren nach irgendeinem der vorstehenden Ansprüche, dadurch gekennzeichnet.
daß am abgestochenen Abschnitt (5) des Rings zum Zwecke des Schweißens eine Fase (7) ausgebildet wird, die sich zum Beispiel über die volle Breite des Rings und ebenso an dessen Seiten auf einen Abstand von etwa 1 mm oder mehr von der behandelten Innenflächenzone und auf eine Tiefe erstreckt, die im wesentlichen der Hälfte der Dicke entspricht.

6. Herstellungsverfahren nach irgendeinem der vorstehenden Ansprüche, dadurch gekennzeichnet,
daß für die Montage eine Presse mit einem Stempel (9) von den Seitenflächen des Ringes (3) angepaßter Form und ein nach oben spitz zulaufendes, kegelstumpfförmiges Sockelteil oder Untergesenk (11) benutzt werden, dessen Querschnitt der seitlichen Öffnung des Rings entspricht, damit dieser an seinem oberen Abschnitt in Eingriff gelangt, wobei der Kegelwinkel relativ klein ist.

7. Herstellungsverfahren nach irgendeinem der vorstehenden Ansprüche, dadurch gekennzeichnet.
daß zuum Einspannen des Käfigs des montierten Kugelgelenks zwecks Schweißen des abgestochenen Abschnitts (5) eine Vorrichtung (13) benutzt wird, die zwei im wesentlichen halbrunde und dem Ring in seiner nachgespannten Form angepaßte und unten gelenkig angeordnete Backen (15) umfaßt, wobei diese Backen unter Druck gegeneinander bewegt werden, bis der Ring vollständig nachgespannt ist, und wobei die Abstechkanten miteinander in Kontakt kommen und eine obere Öffnung (17) bilden, durch welche die Schweißung ausgeführt werden kann.

8. Herstellungsverfahren nach irgendeinem der vorstehenden Ansprüche, dadurch gekennzeichnet,
daß die Schweißung auf herkömmliche Weise durch Lichtbogen unter Schutzgas zwischen den Elektroden unter Zuführung des Materials beispielweise in Form eines geeigneten Schweißdrahts auf NiCr-Basis mit einer unter 250 °C liegenden Temperatur ausgeführt wird, um eine Beeinträchtigung der behandelten Oberflächenzonen zu vermeiden.

9. Herstellungsverfahren nach irgendeinem der Ansprüche 1 bis 5 und 7, 8, dadurch gekennzeichnet,
daß die Montage des Kugelgelenks in der Weise erfolgt, daß das kugelförmige Element (1) senkrecht auf den Ring (3) aufgesetzt und mit einem Teil seines Umfangs auf einem Stempel entsprechender Form gehalten wird, während sich der Ring auf einem unteren Sockelteil öffnet, der innen stark aufgeweitet ist und eine Art von Hülse bildet, welche die seitlichen Flächen des Rings aufnimmt.

10. Herstellungsverfahren nach irgendeinem der Ansprüche 1 bis 6 und 8, 9, dadurch gekennzeichnet,
daß die zur Formgebung benutzte Vorrichtung die Form einer konischen Innenbohrung hat, von der das Kugelgelenk unter Druck aufgenommen wird und in seiner endgültigen nachgespannten Stellung anliegt.
